# EUROPEAN PATENT APPLICATION

(11) **EP 4 725 906 A1**
(43) Date of publication of application: **15.04.2026**
(21) Application number: 25196969.7
(22) Date of filing: 20.08.2025
(51) Int. Cl.: C01D 15/00, C01G 28/00, H01M 10/0562

(54) **SULFIDE SOLID ELECTROLYTE, METHOD OF PREPARING THE SAME AND APPLICATION**

(30) Priority: 11.10.2024 CN 202411418926; 31.10.2024 CN 202411545093
(71) Applicant: AESC Japan Ltd., Yokohama-Shi, Kanagawa 220-0012 (JP)
(72) Inventor: YU, Le, Pudong New Area Shanghai, 201315 (CN); WU, Ming, Pudong New Area Shanghai, 201315 (CN); LI, Qian, Pudong New Area Shanghai, 201315 (CN); LYU, Wenbin, Pudong New Area Shanghai, 201315 (CN)
(74) Representative: Becker, Eberhard

(57) **Abstract**

A sulfide solid electrolyte, a method of preparing the same, and an application are provided. The sulfide solid electrolyte has a molecular formula of LiₐP_{1-b}M_{b}S_{c}O_{d}Xₑ, where 5<a<6, 0<b<1, 1.5<c<5, 0<d<2.5, 4<c+d<5, 1<e<2, M is selected from one or more of Al, Ga, In, Ti, Sc, As, Sb, Bi, V, or Nb, and X is selected from one or more of Cl, Br, or I. Through the sulfide solid electrolyte, the method of preparing the same, and the application provided by the disclosure, the stability of ionic conductivity of the sulfide solid electrolyte is increased, the air stability is enhanced, and the electrolyte/active material interface properties are improved, so that the service life and safety of an all-solid-state lithium-ion battery are increased.

## Description

### BACKGROUND

### Technical Field

The disclosure relates to the technical field of lithium-ion batteries, and specifically relates to a sulfide solid electrolyte, a method of preparing the same, and an application.

### Description of Related Art

Lithium-ion batteries have been widely applied in fields such as portable electronic apparatuses, electric vehicles, and energy storage systems due to their advantages of high energy density, high power density, and long cycle service life. However, conventionally, a lithium-ion battery adopts flammable organic liquid electrolyte, which may pose safety hazards, so further development of lithium-ion batteries is limited. In recent years, in order to overcome the safety problems found in the organic liquid electrolyte, solid-state lithium batteries have received widespread attention. A solid-state lithium battery uses solid electrolyte to replace the conventional organic liquid electrolyte and has advantages such as improved safety, wide electrochemical window, and long cycle service life.

At present, sulfide solid electrolytes are widely used in lithium-ion batteries. However, methods of preparing most of the existing sulfide electrolytes are complex and costly, and the prepared sulfide solid electrolytes are prone to deliquescence in air and are unstable. In addition, the electrochemical performance of the existing sulfide electrolytes in lithium-ion batteries, especially the cycle service life, needs to be further improved.

### SUMMARY

The disclosure provides a sulfide solid electrolyte, a method of preparing the same, and an application through which stability of ionic conductivity of the sulfide solid electrolyte is increased, air stability is enhanced, and electrolyte/active material interface properties are improved, so that the service life and safety of an all-solid-state lithium-ion battery are increased.

To address the above technical problems, the disclosure provides a sulfide solid electrolyte having a molecular formula of LiₐP_{1-b}M_{b}S_{c}O_{d}Xₑ, where 5<a<6, 0<b<1, 1.5<c<5, 0<d<2.5, 4<c+d<5, 1<e<2, M is selected from one or more of Al, Ga, In, Ti, Sc, As, Sb, Bi, V, or Nb, and X is selected from one or more of Cl, Br, or I.

In an embodiment of the disclosure, M is selected from one or more of Sb, In, or Bi.

In an embodiment of the disclosure, X is selected from Cl, and a value range of b is 0<b<0.1.

The disclosure further provides a method of preparing the sulfide solid electrolyte, and the method includes the following steps.

According to a chemical formula of the sulfide solid electrolyte, a Li source, a P source, a M source, a S source, and a X source are mixed according to a stoichiometric ratio, and the mixture is placed in a ball mill jar for ball milling to obtain sulfide solid electrolyte precursor powder.

The sulfide solid electrolyte precursor powder is calcined at a predetermined temperature to obtain the sulfide solid electrolyte.

In an embodiment of the disclosure, the Li source is selected from one or more of LiCl, LiBr, LiI, or Li₂S, the P source is selected from one or more of elemental P, P₂S₅, P₄S₆, PCl₅, or PBr₅, the M source is selected from one or more of oxide of M or sulfide of M, the S source is selected from one or more of elemental S, Li₂S, P₂S₅, P₄S₆, As₂S₅, As₂S₃, Sb₂S₅, Sb₂S₃, Bi₂S₅, Bi₂S₃, Al₂S₃, Ga₂S₃, In₂S₃, or Sc₂S₃, the X source is selected from one or more of LiCl, PCl₅, LiBr,

PBr₅, LiI, or I₂, and the O element in the chemical formula is derived from the oxide of M.

In an embodiment of the disclosure, ball milling time is 1h to 48h, a ball milling rotation speed is 50 rpm to 1,500 rpm, and a ball-to-material ratio is 1:1 to 100:1.

In an embodiment of the disclosure, the predetermined temperature is 400°C to 600°C, and time of the calcining treatment is 1h to 18h.

The disclosure further provides an all-solid-state lithium-ion battery at least including a positive electrode sheet, a negative electrode sheet, and a solid electrolyte membrane.

The positive electrode sheet includes a halide solid electrolyte including Li_{2.35}Zr_{0.65}Fe_{0.35}Cl₅Br_{0.5}I_{0.5}.

The solid electrolyte membrane is disposed between the adjacent positive electrode sheet and negative electrode sheet. The solid electrolyte membrane includes the sulfide solid electrolyte according to the above.

In an embodiment of the disclosure, the positive electrode sheet includes a positive active material selected from one or more of lithium nickel cobalt manganese oxide, lithium nickel oxide, lithium manganese oxide, lithium nickel manganese oxide, lithium cobalt oxide, or lithium nickel cobalt aluminum oxide.

The disclosure further provides an electronic apparatus including the all-solid-state lithium-ion battery according to the above.

To sum up, the disclosure provides a sulfide solid electrolyte, a method of preparing the same, and an application. By introducing +3 or +5 valence M element and O element into the sulfide solid electrolyte, LiCl, Li₂O, and Li-Sb/Li-Bi/Li-In alloys are formed in the electrolyte/lithium metal negative electrode interface layer, so that the electric field is uniform, and the local current density is balanced. As such, Li nucleation and growth are regulated, the rapid growth of lithium dendrites at the growth interface is effectively suppressed, the stability and performance of the lithium-ion battery are significantly improved, and the service life and safety of the all-solid-state lithium-ion battery are enhanced. The intrinsic resistance of the sulfide solid electrolyte to atmospheric degradation is increased, the generation of H₂S is effectively reduced, and the possibility of the battery in actual production grows, so the air stability and chemical stability of the sulfide solid electrolyte are improved. The sulfide solid electrolyte has high stability and specific reactivity, the stability of conductivity of the sulfide solid electrolyte is increased, the air stability is enhanced, and the electrolyte/active material interface properties are improved, so that compatibility with active materials is raised. The ionic conductivity and electrochemical stability of the sulfide solid electrolyte is increased, and the voltage stability is improved.

### BRIEF DESCRIPTION OF THE DRAWINGS

To make the technical solutions provided in the embodiments of the disclosure more clearly illustrated, several accompanying drawings required by the embodiments for description are briefly introduced as follows. Obviously, the drawings in the following description are merely some embodiments of the disclosure, and for a person having ordinary skill in the art, other drawings can be obtained based on these drawings without inventive effort.
FIG. 1 is a performance graph of an all-solid-state lithium-ion battery in Example 3 subjected to a 1C/1C long cycle at room temperature.
FIG. 2 is a scanning electron microscope (SEM) image of a sulfide solid electrolyte in Example 3.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

It should be understood that the disclosure can be implemented in different forms and should not be interpreted as limited to the embodiments presented herein. On the contrary, providing these embodiments will make the disclosure thorough and complete and will fully convey the scope of the disclosure to a person having ordinary skill in the art.

The technical solution of the disclosure is further detailed in combination with the embodiments in the following paragraphs. Obviously, the described embodiments are only part of the embodiments of the disclosure, not all embodiments. Based on the embodiments of the disclosure, all other embodiments obtained by a person having ordinary skill in the art without making any inventive effort fall within the scope that the disclosure seeks to protect.

The disclosure provides a sulfide solid electrolyte having a molecular formula of LiₐP_{1-b}M_{b}S_{c}O_{d}Xₑ, where 5<a<6, 0<b<1, 1.5<c<5, 0<d<2.5, 4<c+d<5, 1<e<2, M is selected from one or more of Al, Ga, In, Ti, Sc, Sb, Bi, As, V, or Nb, for example, and X is selected from one or more of Cl, Br, or I, for example. Herein, by introducing a M element and an O element into the halogenrich sulfide solid electrolyte, P-O and M-S bonds are formed in a crystal structure. In this way, the intrinsic resistance to atmospheric degradation is improved, the generation of H₂S is effectively reduced, and the air stability and chemical stability of the sulfide solid electrolyte are enhanced. In addition, when this sulfide solid electrolyte is used to assemble an all-solid-state lithium-ion battery, LiCl, Li₂O, and Li-Sb/Li-Bi/Li-In alloys may be formed in an electrolyte/lithium metal negative electrode interface layer. Herein, the Li₂O has high intrinsic ionic conductivity, while Li-Sb/Li-Bi/Li-In alloys may promote fast transfer kinetics of Li+, so that the electric field is uniform, the local current density is balanced, and the nucleation and growth of Li are thus regulated. In addition, LiCl has high interfacial energy and may effectively suppress the rapid growth of lithium dendrites at the growth interface, so that the stability and performance of the lithium-ion battery may be significantly improved, and the service life and safety of the all-solid-state lithium-ion battery are enhanced.

In an embodiment of the disclosure, M is selected from one or more of Sb, In, or Bi, for example. Since Sb, In, or Bi has a moderate ionic radius, the ionic radii of these elements are close to those of the host elements in the sulfide electrolyte, such as sulfur and phosphorus. Therefore, during doping, they may more easily replace the positions of the host elements without causing excessive lattice distortion. Moreover, Sb, In or Bi have moderate electronegativity and may form stable chemical bonds with sulfur elements in the sulfide, so Sb, In, or Bi is not easily damaged by external influences, thereby enabling the sulfide solid electrolyte to have high stability and specific reactivity. As such, the stability of the ionic conductivity of the sulfide solid electrolyte is improved, air stability is enhanced, electrolyte/active material interface properties are improved, and compatibility with active materials are thus improved.

In an embodiment of the disclosure, X is selected from halogen elements. According to different halogens, the degree of anion disorder between 4a and 4c sites in the crystal structure of the sulfide solid electrolyte is different, from a small amount of antisite defects when X is I to 60% site disorder when X is Cl. The lithium conductivity of these compounds mainly depends on the degree of disorder of anion and cation site occupation. Therefore, X is selected from Cl, for example, to improve the ionic conductivity and electrochemical stability of the sulfide solid electrolyte and improve voltage stability. A value range of b is 0<b<0.1. In a specific embodiment of the disclosure, when M is +5 valence, b is optimally 0.04, and when M is +3 valence, b is optimally 0.02, so as to improve the cycle performance of the lithium-ion battery.

The disclosure further provides a method of preparing the sulfide solid electrolyte, and the following steps are at least included. According to a chemical formula of the sulfide solid electrolyte, a Li source, a P source, a M source, a S source, and a X source are mixed according to a stoichiometric ratio, and the mixture is placed in a ball mill jar for ball milling to obtain sulfide solid electrolyte precursor powder. The sulfide solid electrolyte precursor powder is calcined at a predetermined temperature to obtain the sulfide solid electrolyte.

In an embodiment of the disclosure, according to the chemical formula LiₐP_{1-b}M_{b}S_{c}O_{d}Xₑ of the sulfide solid electrolyte, the Li source, P source, M source, S source, and X source are uniformly mixed according to the stoichiometric ratio, where the Li source is selected from one or more of LiCl, LiBr, LiI, or Li₂S, etc., the P source is selected from one or more of elemental P, P₂S₅, P₄S₆, PCl₅, or PBr₅, etc., the M source is selected from one or more of oxide of M or sulfide of M, the S source is selected from one or more of elemental S, Li₂S, P₂S₅, P₄S₆, As₂S₅, As₂S₃, Sb₂S₅, Sb₂S₃, Bi₂S₅, Bi₂S₃, Al₂S₃, Ga₂S₃, In₂S₃, or Sc₂S₃, etc., the X source is selected from one or more of LiCl, PCl₅, LiBr, PBr₅, LiI, or I₂, etc., and the O element in the chemical formula is derived from the oxide of M. After the raw materials are mixed uniformly, they are placed in a ball mill jar and ball milled under an inert gas atmosphere, where a ball milling time is 1h to 48h, a ball milling rotation speed is 50 rpm to 1,500 rpm, and a ball-to-material ratio is 1:1 to 100:1. The sulfide solid electrolyte precursor powder is obtained.

In an embodiment of the disclosure, the sulfide solid electrolyte precursor powder is calcined at the predetermined temperature, where the predetermined temperature is 400°C to 600°C, and the calcining time is 1h to 18h, to obtain the sulfide solid electrolyte.

The disclosure further provides an all-solid-state lithium-ion battery including a positive electrode sheet, a negative electrode sheet, and a solid electrolyte membrane disposed between the adjacent positive electrode sheet and negative electrode sheet. The positive electrode sheet includes a positive active material and a halide solid electrolyte. The positive active material is selected from, for example, one or more of lithium nickel cobalt manganese oxide (NCM), lithium nickel oxide (LNO), lithium manganese oxide (LMO), lithium nickel manganese oxide (LNMO), lithium cobalt oxide (LCO), or lithium nickel cobalt aluminum oxide (NCA), etc. The halide solid electrolyte includes Li_{2.35}Zr_{0.65}Fe_{0.35}Cl₅Br_{0.5}I_{0.5}, and the halide solid electrolyte does not undergo exothermic reaction with the de-lithiated positive active material, so that the safety of the lithium-ion battery is improved. The negative electrode sheet is, for example, one or more of a metal lithium sheet, a metal indium sheet, or a lithium-indium alloy sheet, etc. The negative electrode sheet further includes, for example, a negative active material, where the negative active material is selected from one or more of a graphite material, a silicon material, or a composite material of the graphite material and silicon material, etc. The solid electrolyte membrane includes the aforementioned sulfide solid electrolyte, so as to improve the performance of the all-solid-state lithium-ion battery.

In an embodiment of the disclosure, the positive electrode sheet further includes a conductive agent and a binder, where the conductive agent is, for example, one or a combination of at least two of conductive carbon black (super P, SP), carbon nano-tube (CNT), vapor grown carbon fiber (VGCF), or graphene, etc. The binder is, for example, polytetrafluoroethylene (PTFE) and its derivatives, etc. A mass ratio of the positive active material, halide solid electrolyte, conductive agent, and binder is, for example, (65-78):(20-30):(1-3):(1-2). In this embodiment, the mass ratio of the positive active material, halide solid electrolyte, conductive agent, and binder is, for example, 69:29:1:1. The conductive agent is a combination of the conductive carbon black (super-P) and vapor grown carbon fiber (VGCF). A mass ratio of the conductive carbon black and vapor grown carbon fiber is 1:1. The binder is, for example, polytetrafluoroethylene. After the positive active material, halide solid electrolyte, conductive agent, and binder are uniformly mixed, a mixed powder is obtained, and the positive electrode sheet is obtained by dry pressing the mixed powder. In an embodiment of the disclosure, when the negative electrode sheet includes a negative active material, the negative electrode sheet further includes a solid electrolyte, a conductive agent, and a binder, etc., where the solid electrolyte is, for example, a halide solid electrolyte or a sulfide electrolyte, etc., which is not limited by the disclosure. The binder is, for example, at least one of polyisoprene, polyethylene or polypropylene, etc., and the conductive agent is, for example, at least one of carbon nano-tube, carbon fiber, or acetylene black. In the disclosure, a ratio of the negative active material, conductive agent, and binder is not limited, which may be selected according to manufacturing needs. The negative electrode sheet is obtained by, for example, dry pressing.

In an embodiment of the disclosure, to test the performance of the obtained sulfide solid electrolyte, for example, the sulfide solid electrolyte is cold-pressed under a predetermined pressure to obtain a solid electrolyte membrane, where the predetermined pressure is, for example, 300 MPa to 400 MPa, and a thickness of the solid electrolyte membrane is, for example, 100 µm to 500 µm.

In an embodiment of the disclosure, the negative electrode sheet is, for example, selected as a metallic lithium sheet. The positive electrode sheet, solid electrolyte membrane, and negative electrode sheet are sequentially placed, pressurized, and sealed under vacuum or inert atmosphere to obtain the all-solid-state lithium-ion battery. Herein, the assembly process of the all-solid-state lithium-ion battery is completed, for example, in a glove box under argon atmosphere.

The disclosure is to be explained more specifically through the following embodiments, which should not be understood as limiting. Within the scope consistent with the spirit of the disclosure, appropriate modifications may be made, and all of which fall within the technical scope of the disclosure.

### Example 1

Preparation of sulfide solid electrolyte: Under argon atmosphere, 2 mol of Li₂S, 1.5 mol of LiCl, 0.495 mol of P₂S₅, and 0.005mol of Sb₂O₅ were placed into a tungsten steel ball milling jar, and tungsten steel balls were added according to a ball-to-material ratio of 40:1. After ball milling for 10 minutes at a ball milling rotation speed of 100 rpm, ball milling is performed at 500 rpm for 16h to obtain uniformly mixed sulfide solid electrolyte precursor powder. The sulfide solid electrolyte precursor powder was loaded into a crucible and sintered at a temperature of 500°C for 10h, and Li_{5.5}P_{0.99}Sb_{0.01}S_{4.475}O_{0.025}Cl_{1.5} was obtained after cooling.

Preparation of electrolyte membrane: 50 mg of Li_{5.5}P_{0.99}Sb_{0.01}S_{4.475}O_{0.025}Cl_{1.5} was cold-pressed at 360 MPa to prepare an electrolyte membrane with a thickness of 400 µm and a diameter of 10 mm.

Preparation of positive electrode sheet: LiNi_{0.8}Co_{0.1}Mn_{0.1}O₂, a conductive agent, Li_{2.35}Zr_{0.65}Fe_{0.35}Cl₅Br_{0.5}I_{0.5}, and PTFE were mixed according to a mass ratio of 69:1:29:1, and a positive electrode sheet was prepared by a dry method. The conductive agent was super-P and VGCF with a mass ratio of 1:1. The positive electrode sheet was cut into circular pieces with a diameter of 10 mm.

Negative electrode sheet: The negative electrode sheet was selected as a metallic lithium sheet and cut into circular pieces with a diameter of 10mm.

Assembly of all-solid-state battery: The above-prepared positive electrode sheet, electrolyte membrane, and negative electrode sheet were assembled into an all-solid-state battery.

Assembly of symmetric battery: Counter electrodes Li were placed on both sides of the electrolyte membrane and assembled with the electrolyte membrane into a Li/Li symmetric battery.

### Example 2

The chemical formula of the sulfide solid electrolyte prepared from 2 mol of Li₂S, 1.5 mol of LiCl, 0.49 mol of P₂S₅, and 0.01mol of Sb₂O₅ was Li_{5.5}P_{0.98}Sb_{0.02}S_{4.45}O_{0.05}Cl_{1.5}, and other operations were consistent with that of Example 1.

### Example 3

The chemical formula of the sulfide solid electrolyte prepared from 2 mol of Li₂S, 1.5 mol of LiCl, 0.48 mol of P₂S₅, and 0.02 mol of Sb₂O₅ was Li_{5.5}P_{0.96}Sb_{0.04}S_{4.40}O_{0.10}Cl_{1.5}, and other operations were consistent with that of Example 1.

### Example 4

The chemical formula of the sulfide solid electrolyte prepared from 2 mol of Li₂S, 1.5 mol of LiCl, 0.47 mol of P₂S₅, and 0.03 mol of Sb₂O₅ was Li_{5.5}P_{0.94}Sb_{0.06}S_{4.35}O_{0.15}Cl_{1.5}, and other operations were consistent with that of Example 1.

### Example 5

The chemical formula of the sulfide solid electrolyte prepared from 2 mol of Li₂S, 1.5 mol of LiCl, 0.46 mol of P₂S₅, and 0.04 mol of Sb₂O₅ was Li_{5.5}P_{0.92}Sb_{0.08}S_{4.3}O_{0.20}Cl_{1.5}, and other operations were consistent with that of Example 1.

### Example 6

The chemical formula of the sulfide solid electrolyte prepared from 2 mol of Li₂S, 1.5 mol of LiCl, 0.45 mol of P₂S₅, and 0.05 mol of Sb₂O₅ was Li_{5.5}P_{0.9}Sb_{0.1}S_{4.25}O_{0.25}Cl_{1.5}, and other operations were consistent with that of Example 1.

### Example 7

The chemical formula of the sulfide solid electrolyte prepared from 1.6 mol of Li₂S, 1.9 mol of LiCl, 0.48 mol of P₂S₅, and 0.02 mol of Sb₂O₅ was Li_{5.1}P_{0.96}Sb_{0.04}S₄O_{0.10}Cl_{1.9}, and other operations were consistent with that of Example 1.

### Example 8

The chemical formula of the sulfide solid electrolyte prepared from 2.4 mol of Li₂S, 1.1 mol of LiCl, 0.48 mol of P₂S₅, and 0.02 mol of Sb₂O₅ was Li_{5.9}P_{0.96}Sb_{0.04}S_{4.8}O_{0.10}Cl_{1.1}, and other operations were consistent with that of Example 1.

### Example 9

The chemical formula of the sulfide solid electrolyte prepared from 2 mol of Li₂S, 1.4 mol of LiCl, 0.1 mol of LiBr, 0.48 mol of P₂S₅, and 0.02 mol of Sb₂O₅ was Li_{5.5}P_{0.96}Sb_{0.o4}S_{4.40}O_{0.10}Cl_{1.4}Br_{0.1}, and other operations were consistent with that of Example 1.

### Example 10

The chemical formula of the sulfide solid electrolyte prepared from 2 mol of Li₂S, 1.3 mol of LiCl, 0.1 mol of LiBr, 0.1 mol of LiI, 0.48 mol of P₂S₅, and 0.02 mol of Sb₂O₅ was Li_{5.5}P_{0.96}Sb_{0.04}S_{4.40}O_{0.10}Cl_{1.3}Br_{0.1}I_{0.1}, and other operations were consistent with that of Example 1.

### Example 11

The chemical formula of the sulfide solid electrolyte prepared from 2.01 mol of Li₂S, 1.5 mol of LiCl, 0.495 mol of P₂S₅, and 0.005 mol of In₂O₃ was Li_{5.52}P_{0.99}In_{0.01}S_{4.485}O_{0.015}Cl_{1.5}, and other operations were consistent with that of Example 1.

### Example 12

The chemical formula of the sulfide solid electrolyte prepared from 2.015mol of Li₂S, 1.5 mol of LiCl, 0.4925 mol of P₂S₅, and 0.075 mol of In₂O₃ was Li_{5.53}P_{0.985}In_{0.015}S_{4.4775}O_{0.0225}Cl_{1.5}, and other operations were consistent with that of Example 1.

### Example 13

The chemical formula of the sulfide solid electrolyte prepared from 2.02 mol of Li₂S, 1.5 mol of LiCl, 0.495 mol of P₂S₅, and 0.01mol of In₂O₃ was Li_{5.54}P_{0.98}In_{0.02}S_{4.47}O_{0.03}Cl_{1.5}, and other operations were consistent with that of Example 1.

### Example 14

The chemical formula of the sulfide solid electrolyte prepared from 2.04 mol of Li₂S, 1.5 mol of LiCl, 0.48 mol of P₂S₅, and 0.02 mol of In₂O₃ was Li_{5.58}P_{0.96}In_{0.04}S_{4.44}O_{0.06}Cl_{1.5}, and other operations were consistent with that of Example 1.

### Example 15

The chemical formula of the sulfide solid electrolyte prepared from 2.06 mol of Li₂S, 1.5 mol of LiCl, 0.47 mol of P₂S₅, and 0.03 mol of In₂O₃ was Li_{5.62}P_{0.94}In_{0.06}S_{4.41}O_{0.09}Cl_{1.5}, and other operations were consistent with that of Example 1.

### Example 16

The chemical formula of the sulfide solid electrolyte prepared from 2.08 mol of Li₂S, 1.5 mol of LiCl, 0.46 mol of P₂S₅, and 0.04 mol of In₂O₃ was Li_{5.66}P_{0.92}In_{0.08}S_{4.38}O_{0.12}Cl_{1.5}, and other operations were consistent with that of Example 1.

### Example 17

The difference between this example and Example 1 was that, the chemical formula of the sulfide solid electrolyte prepared from 2.1mol of Li₂S, 1.5 mol of LiCl, 0.45 mol of P₂S₅, and 0.05 mol of In₂O₃ was Li_{5.7}P_{0.9}In_{0.1}S_{4.35}O_{0.15}Cl_{1.5}, and other operations were consistent with that of Example 1.

### Example 18

The chemical formula of the sulfide solid electrolyte prepared from 1.62 mol of Li₂S, 1.9 mol of LiCl, 0.49 mol of P₂S₅, and 0.01mol of In₂O₃ was Li_{5.14}P_{0.98}In_{0.02}S_{4.07}O_{0.03}Cl_{1.9}, and other operations were consistent with that of Example 1.

### Example 19

The chemical formula of the sulfide solid electrolyte prepared from 2.42 mol of Li₂S, 1.1 mol of LiCl, 0.49 mol of P₂S₅, and 0.01 mol of In₂O₃ was Li_{5.94}P_{0.98}In_{0.02}S_{4.87}O_{0.03}Cl_{1.1}, and other operations were consistent with that of Example 1.

### Example 20

The chemical formula of the sulfide solid electrolyte prepared from 2.02mol of Li₂S, 1.4 mol of LiCl, 0.1 mol of LiBr, 0.49 mol of P₂S₅, and 0.01mol of In₂O₃ was Li_{5.54}P_{0.98}In_{0.02}S_{4.47}O_{0.03}Cl_{1.4}Br_{0.1}, and other operations were consistent with that of Example 1.

### Example 21

The chemical formula of the sulfide solid electrolyte prepared from 2.02 mol of Li₂S, 1.3 mol of LiCl, 0.1 mol of LiBr, 0.1 mol of LiI, 0.49 mol of P₂S₅, and 0.01 mol of In₂O₃ was Li_{5.54}P_{0.98}In_{0.02}S_{4.47}O_{0.03}Cl_{1.3}Br_{0.1}I_{0.1}, and other operations were consistent with that of Example 1.

### Example 22

The chemical formula of the sulfide solid electrolyte prepared from 2.01 mol of Li₂S, 1.5 mol of LiCl, 0.495 mol of P₂S₅, and 0.005 mol of Bi₂O₃ was Li_{5.52}P_{0.99}Bi_{0.01}S_{4.485}O_{0.015}Cl_{1.5}, and other operations were consistent with that of Example 1.

### Example 23

The chemical formula of the sulfide solid electrolyte prepared from 2.015 mol of Li₂S, 1.5 mol of LiCl, 0.4925 mol of P₂S₅, and 0.075 mol of Bi₂O₃ was Li_{5.53}P_{0.985}Bi_{0.015}S_{4.4775}O_{0.0225}Cl_{1.5}, and other operations were consistent with that of Example 1.

### Example 24

The chemical formula of the sulfide solid electrolyte prepared from 2.02 mol of Li₂S, 1.5 mol of LiCl, 0.49 mol of P₂S₅, and 0.01mol of Bi₂O₃ was Li_{5.54}P_{0.98}Bi_{0.02}S_{4.47}O_{0.03}Cl_{1.5}, and other operations were consistent with that of Example 1.

### Example 25

The chemical formula of the sulfide solid electrolyte prepared from 2.04 mol of Li₂S, 1.5 mol of LiCl, 0.48 mol of P₂S₅, and 0.02mol of Bi₂O₃ was Li_{5.58}P_{0.96}Bi_{0.04}S_{4.44}O_{0.06}Cl_{1.5}, and other operations were consistent with that of Example 1.

### Example 26

The chemical formula of the sulfide solid electrolyte prepared from 2.06mol of Li₂S, 1.5 mol of LiCl, 0.47 mol of P₂S₅, and 0.03 mol of Bi₂O₃ was Li_{5.62}P_{0.94}Bi_{0.06}S_{4.41}O_{0.09}Cl_{1.5}, and other operations were consistent with that of Example 1.

### Example 27

The chemical formula of the sulfide solid electrolyte prepared from 2.08 mol of Li₂S, 1.5 mol of LiCl, 0.46 mol of P₂S₅, and 0.04 mol of Bi₂O₃ was Li_{5.66}P_{0.92}Bi_{0.08}S_{4.38}O_{0.12}Cl_{1.5}, and other operations were consistent with that of Example 1.

### Example 28

The chemical formula of the sulfide solid electrolyte prepared from 2.1 mol of Li₂S, 1.5 mol of LiCl, 0.45 mol of P₂S₅, and 0.05 mol of Bi₂O₃ was Li_{5.7}P_{0.9}Bi_{0.1}S_{4.35}O_{0.15}Cl_{1.5}, and other operations were consistent with that of Example 1.

### Example 29

The chemical formula of the sulfide solid electrolyte prepared from 1.62 mol of Li₂S, 1.9 mol of LiCl, 0.49 mol of P₂S₅, and 0.01 mol of Bi₂O₃ was Li_{5.14}P_{0.98}Bi_{0.02}S_{4.07}O_{0.03}Cl_{1.9}, and other operations were consistent with that of Example 1.

### Example 30

The chemical formula of the sulfide solid electrolyte prepared from 2.42 mol of Li₂S, 1.1 mol of LiCl, 0.49 mol of P₂S₅, and 0.01 mol of Bi₂O₃ was Li_{5.94}P_{0.98}Bi_{0.02}S_{4.87}O_{0.03}Cl_{1.1}, and other operations were consistent with that of Example 1.

### Example 31

The chemical formula of the sulfide solid electrolyte prepared from 2.02 mol of Li₂S, 1.4 mol of LiCl, 0.1 mol of LiBr, 0.49 mol of P₂S₅, and 0.01 mol of Bi₂O₃ was Li_{5.54}P_{0.98}Bi_{0.02}S_{4.47}O_{0.03}Cl_{1.4}Br_{0.1}, and other operations were consistent with that of Example 1.

### Example 32

The chemical formula of the sulfide solid electrolyte prepared from 2.02 mol of Li₂S, 1.3 mol of LiCl, 0.1 mol of LiBr, 0.1 mol of LiI, 0.49 mol of P₂S₅, and 0.01 mol of Bi₂O₃ was Li_{5.54}P_{0.98}Bi_{0.02}S_{4.47}O_{0.03}Cl_{1.3}Br_{0.1}I_{0.1}, and other operations were consistent with that of Example 1.

### Comparative Example 1

The chemical formula of the sulfide solid electrolyte prepared from 2 mol of Li₂S, 1.5 mol of LiCl, and 0.5 mol of P₂S₅ was Li_{5.5}PS_{4.5}Cl_{1.4}Br_{0.1} and other operations were consistent with that of Example 1.

### Comparative Example 2

The chemical formula of the sulfide solid electrolyte prepared from 2 mol of Li₂S, 1.4 mol of LiCl, 0.1 mol of LiBr, and 0.5 mol of P₂S₅ was Li_{5.5}PS_{4.5}Cl_{1.3}Br_{0.1}I_{0.1}, and other operations were consistent with that of Example 1.

### Comparative Example 3

The chemical formula of the sulfide solid electrolyte prepared from 2 mol of Li₂S, 1.3 mol of LiCl, 0.1 mol of LiBr, 0.1 mol of LiI, and 0.5mol of P₂S₅ was Li5.5PS4.5C11.3Br0.110.1, and other operations were consistent with that of Example 1.

In the disclosure, different sulfide solid electrolytes are adopted in Examples 1 to 32 and Comparative Examples 1 to 3, and the ionic conductivity of the sulfide solid electrolytes is tested. After the sulfide solid electrolytes are exposed in a dry room at -40°C for 24h, the ionic conductivity test is performed again. In this embodiment, the ionic conductivity is obtained by, for example, an AC impedance method, and the test results are shown in Table 1.

In the disclosure, different sulfide solid electrolytes are adopted in Examples 1 to 32 and Comparative Examples 1 to 3 obtain the lithium-ion batteries. Under 25°C environment, long cycle charge-discharge is performed on the above-prepared lithium-ion batteries, the discharge capacity is measured, and the energy density is calculated and obtained. The working voltage range of the battery test is 2.5V to 4.3V, the charge-discharge rate is 1C/1C, and the discharge capacity of the first cycle is recorded as 1C discharge capacity. The test is ended when the battery capacity reaches 80% (80% state of health, 80% SOH) of the first cycle capacity, and the room temperature cycle number is obtained. The symmetric battery is subjected to a constant current charge-discharge cycle test under a current density of 1mA/cm², and the test results are shown in Table 2.

**Table 1: Ionic conductivity of sulfide solid electrolytes in Examples 1 to 32 and Comparative Examples 1 to 3**

| Group | Solid electrolyte chemical formula | Electrolyte ionic conductivity (S/cm) | Ionic conductivity (S/cm) after exposure to -40° dry room for 24h | Retention rate of ionic conductivity after exposure to 40° dry room for 24h- |
|---|---|---|---|---|
| Example 1 | Li_{5.5}P_{0.99}Sb_{0.01}S_{4.475}O_{0.025}Cl_{1.5} | 8.65×10⁻³ | 3.97×10⁻³ | 45.94% |
| Example 2 | Li_{5.5}P_{0.98}Sb_{0.02}S_{4.45}O_{0.05}Cl_{1.5} | 8.22×10⁻³ | 4.54×10⁻³ | 55.24% |
| Example 3 | Li_{5.5}P_{0.96}Sb_{0.04}S_{4.40}O_{0.10}Cl_{1.5} | 7.93×10⁻³ | 6.62×10⁻³ | 83.48% |
| Example 4 | Li_{5.5}P_{0.94}Sb_{0.06}S_{4.35}O_{0.15}Cl_{1.5} | 6.52×10⁻³ | 5.45×10⁻³ | 83.59% |
| Example 5 | Li_{5.5}P_{0.92}Sb_{0.08}S_{4.3}O_{0.20}Cl_{1.5} | 4.67×10⁻³ | 3.91×10⁻³ | 83.73% |
| Example 6 | Li_{5.5}P_{0.9}Sb_{0.1}S_{4.25}O_{0.25}Cl_{1.5} | 3.33×10⁻³ | 2.79×10⁻³ | 83.78% |
| Example 7 | Li_{5.1}P_{0.96}Sb_{0.04}S₄O_{0.10}Cl_{1.9} | 1.33×10⁻³ | 1.01×10⁻³ | 75.94% |
| Example 8 | Li_{5.9}P_{0.96}Sb_{0.04}S_{4.80}O_{0.10}Cl_{1.1} | 1.45× 10⁻³ | 1.12×10⁻³ | 77.24% |
| Example 9 | Li_{5.5}P_{0.96}Sb_{0.04}S_{4.40}O_{0.10}Cl_{1.4}Br_{0.1} | 7.02×10⁻³ | 5.59×10⁻³ | 79.63% |
| Example 10 | Li_{5.5}P_{0.96}Sb_{0.04}S_{4.40}O_{0.10}Cl_{1.3}Br_{0.1}I_{0.1} | 6.45×10⁻³ | 5.06×10⁻³ | 78.45% |
| Example 11 | Li_{5.52}P_{0.99}In_{0.01}S_{4.485}O_{0.015}Cl_{1.5} | 8.77×10⁻³ | 4.35×10⁻³ | 49.65% |
| Example 12 | Li_{5.53}P_{0.985}In_{0.015}S_{4.4775}O_{0.0225}Cl_{1.5} | 8.34×10⁻³ | 4.84×10⁻³ | 58.08% |
| Example 13 | Li_{5.54}P_{0.98}In_{0.02}S_{4.47}O_{0.03}Cl_{1.5} | 8.05×10⁻³ | 6.63×10⁻³ | 82.36% |
| Example 14 | Li_{5.58}P_{0.96}In_{0.04}S_{4.44}O_{0.06}Cl_{1.5} | 6.64×10⁻³ | 5.48×10⁻³ | 82.53% |
| Example 15 | Li_{5.62}P_{0.94}In_{0.06}S_{4.41}O_{0.09}Cl_{1.5} | 5.72×10⁻³ | 4.73×10⁻³ | 82.69% |
| Example 16 | Li_{5.66}P_{0.92}In_{0.08}S_{4.38}O_{0.12}Cl_{1.5} | 4.79×10⁻³ | 3.97×10⁻³ | 82.88% |
| Example 17 | Li_{5.7}P_{0.9}In_{0.01}S_{4.35}O_{0.15}Cl_{1.5} | 3.45×10⁻³ | 2.86×10⁻³ | 82.90% |
| Example 18 | Li_{5.14}P_{0.98}In_{0.02}S_{4.07}O_{0.03}Cl_{1.9} | 1.45×10⁻³ | 1.14×10⁻³ | 78.62% |
| Example 19 | Li_{5.94}P_{0.98}In_{0.02}S_{4.87}O_{0.03}Cl_{1.1} | 1.57×10⁻³ | 1.24×0⁻³ | 78.98% |
| Example 20 | Li_{5.54}P_{0.98}In_{0.02}S_{4.47}O_{0.03}Cl_{1.4}Br_{0.1} | 7.14×10⁻³ | 5.6×10⁻³ | 78.43% |
| Example 21 | Li_{5.54}P_{0.98}In_{0.02}S_{4.47}O_{0.03}Cl_{1.3}Br_{0.1}I_{0.1} | 6.57×10⁻³ | 5.07×10⁻³ | 77.17% |
| Example 22 | Li_{5.52}P_{0.99}In_{0.01}S_{4.485}O_{0.015}Cl_{1.5} | 9.07×10⁻³ | 4.53×10⁻³ | 49.99% |
| Example 23 | Li_{5.53}P_{0.985}Bi_{0.015}S_{4.4775}O_{0.0225}Cl_{1.5} | 8.64×10⁻³ | 4.92×10⁻³ | 56.99% |
| Example 24 | Li_{5.54}P_{0.98}Bi_{0.02}S_{4.47}O_{0.03}Cl_{1.5} | 8.35×10⁻³ | 6.75×10⁻³ | 80.84% |
| Example 25 | Li_{5.58}P_{0.96}Bi_{0.04}S_{4.44}O_{0.06}Cl_{1.5} | 6.94×10⁻³ | 5.62×10⁻³ | 80.98% |
| Example 26 | Li_{5.62}P_{0.94}Bi_{0.06}S_{4.41}O_{0.09}Cl_{1.5} | 6.02×10⁻³ | 4.88×10⁻³ | 81.06% |
| Example 27 | Li_{5.56}P_{0.92}Bi_{0.08}S_{4.38}O_{0.12}Cl_{1.5} | 5.09×10⁻³ | 4.13×10⁻³ | 81.14% |
| Example 28 | Li_{5.7}P_{0.9}Bi_{0.1}S_{4.35}O_{0.15}Cl_{1.5} | 3.75×10⁻³ | 3.05×10⁻³ | 81.33% |
| Example 29 | Li_{5.14}P_{0.98}Bi_{0.02}S_{4.07}O_{0.03}Cl_{1.9} | 1.57×10⁻³ | 1.16×10⁻³ | 73.89% |
| Example 30 | Li_{5.94}P_{0.98}Bi_{0.02}S_{4.87}O_{0.03}Cl_{1.1} | 1.63×10⁻³ | 1.24×10⁻³ | 76.07% |
| Example 31 | Li_{5.53}P_{0.985}Bi_{0.015}S_{4.47}O_{0.03}Cl_{1.4}Br_{0.1} | 7.44×10⁻³ | 5.72×10⁻³ | 76.88% |
| Example 32 | Li_{5.14}P_{0.98}Bi_{0.02}S_{4.47}O_{0.03}Cl_{1.3}Br_{0.1}I_{0.1} | 6.87×10⁻³ | 5.19×10⁻³ | 75.55% |
| Comparative Example 1 | Li_{5.5}PS_{4.5}Cl_{1.5} | 9.34×10⁻³ | 1.05×10⁻³ | 11.24% |
| Comparative Example 2 | Li_{5.5}PS_{4.5}Cl_{1.4}Br_{0.1} | 8.23×10⁻³ | 1.11×10⁻³ | 13.54% |
| Comparative Example 3 | Li_{5.5}PS_{4.5}Cl_{1.3}Br_{0.1}I_{0.1} | 7.29×10⁻³ | 1.18×10⁻³ | 16.19% |

**Table 2. Test results of lithium-ion batteries and symmetric batteries in Examples 1 to 32 and Comparative Examples 1 to 3**

| Group | Room temperature 1C/1C cycle count (80% SOH) | Li/Li symmetric battery cycle time (h) at 1mA/cm² |
|---|---|---|
| Example 1 | 135 (short circuit) | 325 |
| Example 2 | 289 (short circuit) | 633 |
| Example 3 | 595 | 1245 |
| Example 4 | 552 | 1159 |
| Example 5 | 499 | 1053 |
| Example 6 | 427 | 909 |
| Example 7 | 259 | 573 |
| Example 8 | 268 | 591 |
| Example 9 | 547 | 1149 |
| Example 10 | 513 | 1081 |
| Example 11 | 134 (short circuit) | 322 |
| Example 12 | 264 (short circuit) | 583 |
| Example 13 | 570 | 1195 |
| Example 14 | 527 | 1109 |
| Example 15 | 474 | 1003 |
| Example 16 | 402 | 859 |
| Example 17 | 389 | 833 |
| Example 18 | 237 | 529 |
| Example 19 | 246 | 547 |
| Example 20 | 508 | 1071 |
| Example 21 | 470 | 995 |
| Example 22 | 117 (short circuit) | 289 |
| Example 23 | 246 (short circuit) | 547 |
| Example 24 | 552 | 1159 |
| Example 25 | 509 | 1073 |
| Example 26 | 456 | 967 |
| Example 27 | 384 | 823 |
| Example 28 | 351 | 757 |
| Example 29 | 241 | 537 |
| Example 30 | 250 | *555* |
| Example 31 | 490 | 1035 |
| Example 32 | 452 | 959 |
| Comparative Example 1 | 2 (short circuit) | 59 |
| Comparative Example 2 | 4 (short circuit) | 63 |
| Comparative Example 3 | 5 (short circuit) | 65 |

Referring to Table 1 and Table 2, by comparing Examples 1 to 32 to Comparative Examples 1 to 3, it may be known that when the M element and the O element are not added to the electrolyte, the lithium-ion battery has almost no cycle performance and short circuit occurs quickly, indicating that when the M element and the O element are lacking, the chemical stability of the sulfide solid electrolyte material is poor, the mechanical strength is insufficient, and it is difficult to ensure the long-term cycle performance of the lithium-ion battery. By introducing the M element and the O element, the cycle performance of the lithium-ion battery may be improved.

Referring to Table 1 and Table 2, by comparing Examples 1 to 6, it may be known that when the M element in the sulfide solid electrolyte is selected as Sb, as the doping amount of Sb increases, the cycle performance of the lithium-ion battery gradually increases and then gradually decreases. By comparing Examples 11 to 17, it may be known that when the M element in the sulfide solid electrolyte is selected as In, as the doping amount of In increases, the cycle performance of the lithium-ion battery gradually increases and then gradually decreases. By comparing Examples 22 to 28, it may be known that when the M element in the sulfide solid electrolyte is selected as Bi, as the doping amount of Bi increases, the cycle performance of the lithium-ion battery gradually increases and then gradually decreases. When the doping amount of Sb, In, or Bi element is excessively low, battery short circuit occurs when the number of cycles is small. Further, as the doping amount of the M element increases, the ionic conductivity of the sulfide solid electrolyte decreases, but the ionic conductivity retention rate after exposure to -40°C dry room for 24h increases. The air stability and chemical stability of the sulfide solid electrolyte are thus enhanced, and the stability and performance of the battery are improved. Therefore, by controlling the doping amount of M in the sulfide solid electrolyte, the cycle service life and safety of the all-solid-state lithium-ion battery may be improved. Further, the ionic conductivity is kept at a high level, the rate performance of the lithium-ion battery is ensured, and the charge-discharge efficiency and the cycle service life are increased. High ionic conductivity may reduce the internal resistance of the battery and improve the power density and energy density of the battery.

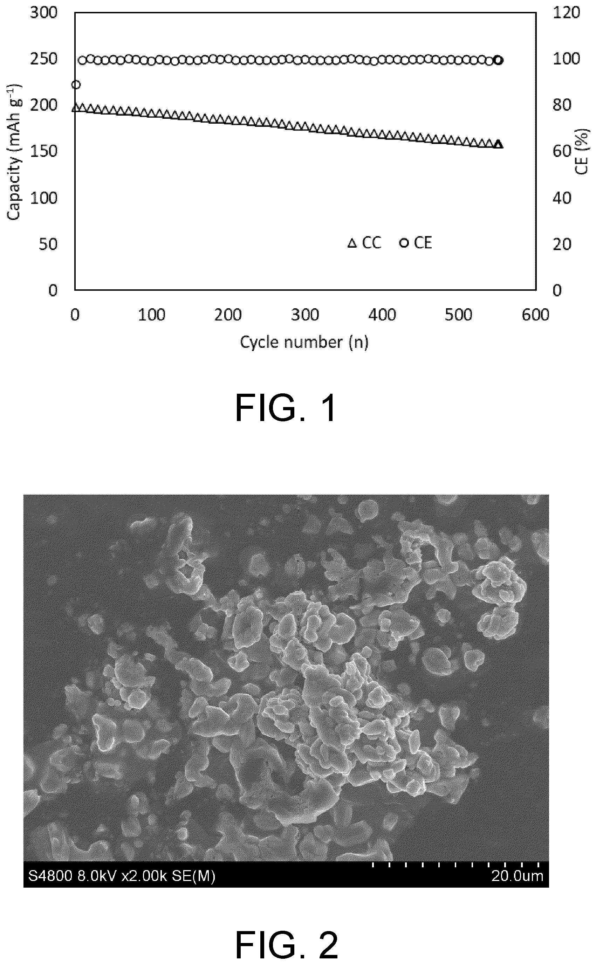

Referring to FIG. 1, in the room temperature cycle process of the all-solid-state lithium-ion battery in Example 3, the current density adopted for constant current charge-discharge is 1C. As can be seen from FIG. 1, under the current density of 1C, the all-solid-state lithium-ion battery in Example 3 still has an energy storage capacity of approximately 160 mAh/g after 500 cycles, indicating that the sulfide solid electrolyte has favorable reaction kinetics and cycle stability. The obtained solid electrolyte membrane has a favorable enhancement effect on the cycle stability and reaction activity specific capacity of the battery. The all-solid-state lithium-ion battery combines favorable specific capacity, rate performance, and cycle service life.

Referring to FIG. 2, the sulfide solid electrolyte obtained in Example 3 is subjected to morphology characterization to obtain a scanning electron microscope (SEM) image. As can be seen from FIG. 2, the sulfide electrolyte prepared using the ball milling method has irregular morphology with a particle size ranging from 2 µm to 8 µm. This particle size is beneficial for maintaining high ionic conductivity while achieving favorable battery cycle stability.

Referring to Table 1 and Table 2, comparing Examples 3, 7, and 8, Examples 13, 18, and 19, and Examples 24, 29, and 30, it can be known that when the doping amount of Sb, In, or Bi element in the sulfide solid electrolyte is the same, increasing and decreasing the Cl element content both cause considerable decline in ionic conductivity and lower the cycle performance of the lithium-ion battery. Therefore, controlling the content of Cl element may ensure the ionic conductivity of the sulfide solid electrolyte and the performance of the lithium-ion battery.

Referring to Table 1 and Table 2, comparing Examples 3, 9, and 10, Examples 13, 20, and 21, and Examples 24, 31, and 32, it may be known that when the doping amount of Sb, In, or Bi element in the sulfide solid electrolyte is the same, incorporating one or more of Br or I elements reduces the cycle performance of the battery. Therefore, selecting Cl element for X may improve the ionic conductivity and electrochemical stability of the sulfide solid electrolyte and improve voltage stability.

The disclosure further provides an electronic apparatus including at least one of the above lithium-ion battery, and the lithium-ion battery is used to provide electrical energy. Herein, the electrical apparatus may be a vehicle, a mobile phone, a portable device, a notebook computer, a ship, a spacecraft, an electric toy, an electric tool, etc. In an embodiment of the disclosure, the vehicle may be, for example, a new energy vehicle, and the new energy vehicle may be a pure electric vehicle, a hybrid vehicle, or a range-extended vehicle, etc. The spacecraft includes an airplane, a rocket, a space shuttle, a spaceship, etc. The electric toy includes a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, including, for example, an electric drill, an electric grinder, an electric wrench, an electric screwdriver, an electric hammer, an impact drill, a concrete vibrator, an electric planer, etc. The electrical apparatus includes the above lithium-ion battery, and the electrical apparatus therefore includes the advantages of the above lithium-ion battery. Description thereof is not repeated herein.

In view of the foregoing, the disclosure provides a sulfide solid electrolyte, a method of preparing the same, and an application. By introducing +3 or +5 valence M element and O element into the sulfide solid electrolyte, LiCl, Li₂O, and Li-Sb/Li-Bi/Li-In alloys may be formed in the electrolyte/lithium metal negative electrode interface layer, so that the electric field is uniform, and the local current density is balanced. As such, Li nucleation and growth may be regulated, the rapid growth of lithium dendrites at the growth interface may be effectively suppressed, the stability and performance of the lithium-ion battery may be significantly improved, and the service life and safety of the all-solid-state lithium-ion battery are enhanced. The intrinsic resistance of the sulfide solid electrolyte to atmospheric degradation is increased, the generation of H₂S is effectively reduced, and the possibility of the battery in actual production grows, so the air stability and chemical stability of the sulfide solid electrolyte are improved. The sulfide solid electrolyte has high stability and specific reactivity, the stability of conductivity of the sulfide solid electrolyte is increased, the air stability is enhanced, and the electrolyte/active material interface properties are improved, so that compatibility with active materials is raised. The ionic conductivity and electrochemical stability of the sulfide solid electrolyte is increased, and the voltage stability is improved.

## Claims

1. A sulfide solid electrolyte, having a molecular formula of LiₐP_{1-b}M_{b}S_{c}O_{d}Xₑ, wherein 5<a<6, 0<b<1, 1.5<c<5, 0<d<2.5, 4<c+d<5, 1<e<2, M is selected from one or more of Al, Ga, In, Ti, Sc, As, Sb, Bi, V, or Nb, and X is selected from one or more of Cl, Br, or I.

2. The sulfide solid electrolyte according to claim 1, wherein M is selected from one or more of Sb, In, or Bi.

3. The sulfide solid electrolyte according to claim 1, wherein X is selected from Cl, and a value range of b is 0<b<0.1.

4. A method of preparing the sulfide solid electrolyte according to any one of claims 1 to 3, comprising:
according to a chemical formula of the sulfide solid electrolyte, mixing a Li source, a P source, a M source, a S source, and a X source according to a stoichiometric ratio, placing the mixture in a ball mill jar for ball milling to obtain sulfide solid electrolyte precursor powder; and
calcining the sulfide solid electrolyte precursor powder at a predetermined temperature to obtain the sulfide solid electrolyte.

5. The method of preparing the sulfide solid electrolyte according to claim 4, wherein the Li source is selected from one or more of LiCl, LiBr, LiI, or Li₂S, the P source is selected from one or more of elemental P, P₂S₅, P₄S₆, PCl₅, or PBr₅, the M source is selected from one or more of oxide of M or sulfide of M, the S source is selected from one or more of elemental S, Li₂S, P₂S₅, P₄S₆, As₂S₅, As₂S₃, Sb₂S₅, Sb₂S₃, Bi₂S₅, Bi₂S₃, Al₂S₃, Ga₂S₃, In₂S₃, or Sc₂S₃, the X source is selected from one or more of LiCl, PCl₅, LiBr, PBr₅, LiI, or I₂, and the O element in the chemical formula is derived from the oxide of M.

6. The method of preparing the sulfide solid electrolyte according to claim 4, wherein ball milling time is 1h to 48h, a ball milling rotation speed is 50 rpm to 1,500 rpm, and a ball-to-material ratio is 1:1 to 100:1.

7. The method of preparing the sulfide solid electrolyte according to claim 4, wherein the predetermined temperature is 400°C to 600°C, and time of the calcining treatment is 1h to 18h.

8. An all-solid-state lithium-ion battery, at least comprising:
a positive electrode sheet comprising a halide solid electrolyte comprising Li_{2.35}Zr_{0.65}Fe_{0.35}Cl₅Br_{0.5}I_{0.5};
a negative electrode sheet; and
a solid electrolyte membrane disposed between the adjacent positive electrode sheet and negative electrode sheet, wherein the solid electrolyte membrane comprises the sulfide solid electrolyte according to any one of claims 1 to 3.

9. The all-solid-state lithium-ion battery according to claim 8, wherein the positive electrode sheet comprises a positive active material selected from one or more of lithium nickel cobalt manganese oxide, lithium nickel oxide, lithium manganese oxide, lithium nickel manganese oxide, lithium cobalt oxide, or lithium nickel cobalt aluminum oxide.

10. A electronic apparatus, comprising the all-solid-state lithium-ion battery according to any one of claims 8 to 9.
